# NEW EUROPEAN PATENT SPECIFICATION

(11) **EP 0 365 653 B2**
(45) Date of publication and mention of the opposition decision: **21.10.1998**
(45) Mention of the grant of the patent: 29.07.1992
(21) Application number: 89905236.9
(22) Date of filing: 12.04.1989
(51) Int. Cl.: B23B 27/04

(54) **ARRANGEMENT IN INSERT HOLDERS**
ANORDNUNG FÜR SCHNEIDEINSATZHALTER
AGENCEMENT POUR PORTE-LAME

(30) Priority: 26.04.1988 SE 8801563
(43) Date of publication of application: 02.05.1990
(73) Proprietor: MIHIC, Wlajko, S-802 28 Gävle (SE)
(72) Inventor: MIHIC, Wlajko, S-802 28 Gävle (SE)
(74) Representative: Nordén, Ake
(86) International application number: SE8900204
(87) International publication number: WO8910224

(56) References cited:
- EP-A- 59 602
- EP-A- 95 062
- EP-A- 152 729
- EP-A- 291 933
- EP-A- 0 259 847
- DE-A- 3 119 834
- SE-A- 452 713

## Description

The present invention relates to an insert holder of the type stated in the claim (US-A- 4801224).

In most prior art insert holders, use is made of mechanical clamping means, such as screws or bodies attachable by screws, which hold the cutting insert in engagement with a seat in the insert holder. For insert holders primarily intended for applications where the available working space is small, e.g. for severing and plunge cutting operations, inser holders have previously been suggested, where the cutting insert is clamped by spring action in a seat facing the workpiece. Such an insert holder is formed with a thicker portion below the seat and a somewhat thinner yieldable portion above the seat. To stabilise the cutting insert in lateral direction, its edges engaging with the sides of the seat are formed with V-shaped grooves matching V-shaped elevations along the sides of the seat.

Since when using prior art insert holders, one must rely on the fact the resilient engaging pressure remains, i.e. that the portion engaging the upper side of the cutting insert is permanently tensioned out of its non-activated position, there is a considerable risk of fatigue which result in decreasing clamping force and the cutting insert not being unresiliently kept in its seat. Especially when subjected to shock, the cutting insert is liable to be displaced in its seat. Heavy stress can also result in the cutting insert splitting of craking along its centre plane by cooperation between the V-shaped recess on the lower side of the cutting insert and the reversed V shape of the edge of the seat.

The object of the invention is to provide an insert holder and a matching cutting insert so designed that the clamping portion of the insert holder is, during operation, substantially unloaded in respect of resilience, whereby the risk of fatigue is eliminated and the cutting insert is firmly kept in position, over a long period of operation. A further object of the new insert holder is to eliminate the risk of cracking or splitting of the cutting insert when subjected to shock stress.

The characteristic features of the new arrangement are stated in the appended claims.

A preferred embodiment of an insert holder according to the invention and a matching cutting insert will now be described in detail with reference to the accompanying drawing in which:
Fig. 1 is a side view of the front portion of an insert holder, and a partly inserted cutting insert,
Fig. 2 shows the same portion of the cutting holder, the cutting insert being in a fully inserted and fixed position, and
Fig. 3 is a cross-sectional view taken along line A-A in Fig. 2.

The insert holder which in its entirety is designated 1, comprises a shaft (not shown in detail) which is designed to fit the clamping means. The shaft can, behind the shown front portion, be wider and higher than the front portion adapted to receive the cutting insert. In the front end of the insert holder there is formed a recess 2 adapted to receive the cutting insert which in its entirety is designated 3.

The lower side of the recess is defined by a bottom 4 which is sloping downwards-backwards and which, along the major part of its length, is formed of two surfaces 5 arranged in V shape. The inner end of the recess is defined by a rounded edge 6 passing into an upper side 7 which is bent slightly downwards.

A nose-shaped projection 8 defining the upper side of the recess 2 extend not quite all the way to the front end of the insert holder and has a top side 9 facing obliquely upwards and passing over a rounded from end 10 into a substantially planar portion 11 directed obliquely downwards and meeting, while forming a shallow projection, the obliquely downwardly bent upper side 7 of the recess so as to form an abutment edge 12.

The cutting insert 3 of which the cutting edge portion need not be described here, comprises a head 13 and a shank 14. The underside of the cutting insert 3 is formed with a V-shaped longitudinal ridge 15 which is complementary to the bottom 4 of the recess, but the angle of which preferably is slightly more shallow' than the angle of the recess. The upper side of the shank 14 is formed, as seen from behind, with an inclined or bevelled surface 16 passing into an abutment and sliding surface 17 which, in the direction of the head of the cutting insert, converges slightly towards a line along the underside 15 of the cutting insert. The deviation is minor and preferably is of the order of 4°. The abutment and sliding surface 17 passes via a rounded surface 18 into an engagement surface 19 extending transversely of the longitudinal direction of the cutting insert.

To mount the cutting insert 3 in the insert holder 1, the V-shaped underside 15 of the cutting insert is positioned in the V-shaped groove 5 at the bottom of the insert holder recess and is pressed inwards. By cooperation between the abutment edge 12 on the lower side of the nose-shaped projection 8 and the bevelled surface 16 of the cutting insert, the nose-shaped portion 8 is bent upwards against its inherent resilience. The outward or upward bending of the portion 8 reaches its maximum at the point 20 in which the belleved surface 16 passes into the abutment and sliding surface 17 and then decreases as the cutting insert 3 is pusched further into the recess 2. When the front end 10 of the nose-shaped portion 8 engages the transverse engagement surface 19 of the head 13 of the cutting insert, the abutment edge 12 has been moved along the abutment and sliding surface 17 of the cutting insert so far that the outwards resilience of the nose-shaped portion has been reduced to a substantial extent.

It is thus obvious that the mounting of the cutting insert 3 in the recess 2 of the insert holder 1 is, after an initial resistance has been overcome, facilitated by the inherent resilience of the nose-shaped portion 8. Withdrawal of the cutting insert requires, however, a successively increasing force as the nose-shaped portion 8 is forced outwards by the sloping abutment and sliding surface 17.

Since the abutment edge 12 cooperates with the planar surface 17, no defined end or bottom position will arise there, but this position is determined only by the engagement between the end 10 of the nose-shaped portion and the rear surface 19 of the head of the cutting insert. As a result, the requirements for precision when manufacturing cutting inserts can be kept within limits. In other words, certain deviations from an ideal value, especially with respect to the height of the shank, can be allowed, and yet a fully acceptable clamping is obtained. A negative deviation in vertical direction merely results in a slightly reduced tensional force, whereas a positive deviation results in a slightly increased tensional force.

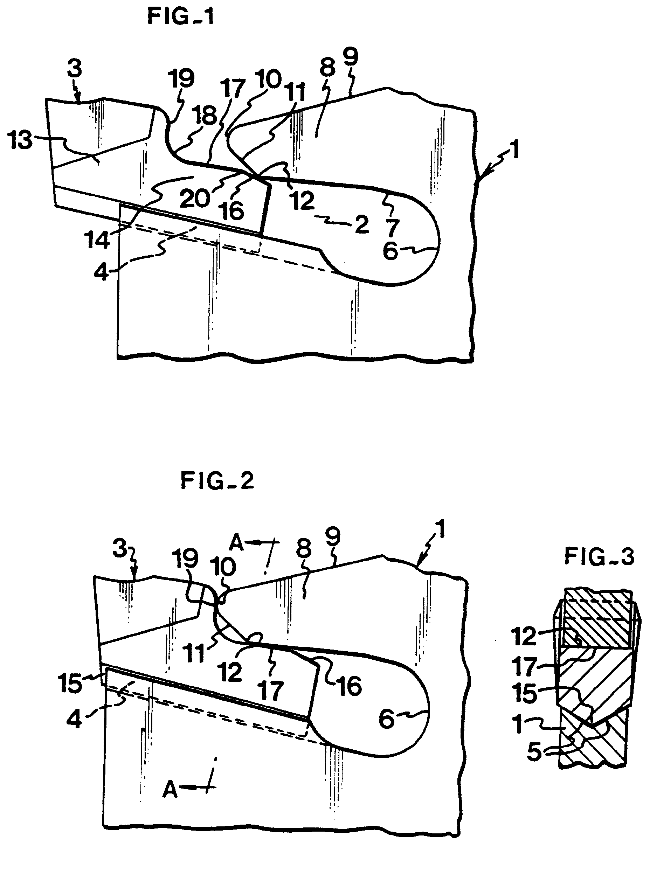

The design of the guiding portions, i.e. the V-shaped groove 5, in relation to the design of the V-shaped underside of the cutting insert 3 is essential to the function. As is best shown in Fig. 3, the angle between the sides of the V groove deviates from the angle between the surfaces of the cutting insert facing the groove, and more precisely such the engagement is established only along the edges of the V groove and the cutting insert, respectively, while there is a clearance between the lower edge of the cutting insert and the deeper part of the bottom of the groove. This causes the cutting insert to be firmly located in the groove, and the risk of tilting in lateral direction is eliminated.

The cutting insert engages with the insert holder along three lines, one line along each side of the V-shaped groove 5 and one line oriented transversely of these lines at 12, i.e. the position in which the tip of the projection or the abutment edge 12 engages the planar surface 17 and abuts the protruding portion thereof with the rearwardly facing edge of the insert head portion 13. As a result, the desired stability is achieved even in cases of cutting insert and insert holder widths of a few millimeter.

The angular difference between the surfaces of the V groove and the bottom surfaces of the cutting insert has a further function, i.e. a further possibility of compensating for deviations from tolerances is obtained. Should the cutting insert have an oversize bordering on the permissible, the force of the portion 8, which acts downwards via the abutment edge 12, will be so great that the sides of the V groove can be elastically deformed slightly outwards, while maintaining the engagement with the underside of the cutting insert.

The cutting insert 3 thus is firmly supported over its entire length by cooperation between the V-shaped guiding portion on the underside of the cutting insert and the V-shaped groove 5 at the lower edge of the recess 2 of the insert holder, and is kept in firm engagement with this edge by the resilience of the nose-shaped portion 8, which acts along a single transverse line, i.e. along the edge 12 oriented transversely of the longitudinal direction of the cutting insert. Through the design described above, all tendencies towards tilting of the cutting insert are eliminated, even if it is subjected to heavy shock from the workpiece.

The invention is not limited to that described above and shown in the drawing, but can be modified in various ways within the scope of the appended claims.

## Claims

1. An arrangement of an insert holder and a cutting insert, said insert (3) being received in a recess (2) in said insert holder (1) and secured therein by damping between portions of said insert holder which define said recess, said recess for the insert (3) being defined in one direction by a portion dimensioned to substantially unyieldably take up occurring stress and formed with a straight guiding portion (4,5) coacting with a straight edge of the insert, and in the other direction by a nose-shaped resilient portion (8) of smaller extent in the direction of said recess than the side formed with the guiding portion, said insert (3) comprising a shank (14) whose one side is formed with a guide means (15) adapted to the guiding portion (4,5) of said recess (2) and whose opposite side comprises an inclined or bevelled portion (16) adjacent the free end of said shank (14), and the free end (10) of said nose-shaped portion (8) being adapted to serve as an end stop for said insert and engage with a substantially transverse surface (19) on the insert head, **characterized** in that the resilient portion (8) forming one side of the recess is formed with a shallow projection extending towards the opposite side of the recess and has a defined top (12) of small extent in the length direction of said recess, that the inclined and bevelled portion (16) of the shank passes into a substantially straight surface portion (17) which serves as a sliding and abutment surface for said defined projection top (12) and which, in the direction away from said inclined or bevelled portion (16), converges slightly towards the opposite side of the insert, that the inclined and bevelled portion (16) is adapted to move or bend the nose-shaped portion (8) aside against the inherent resilient thereof during insertion of said insert (3) into the recess (2) by the engagement with the top (12) of said shallow projection which allows, during the further insertion, a transverse linear engagement with said inclined sliding and abutment surface (17) with a successive reduction of said deflecting or bending aside and hence reduction of the utilised outward resilience, that said guiding portion on the one side of the recess of the insert holder comprises a substantially V-shaped groove (5), that said guide means along the straight side of the insert consists of a complementarily V-shaped ridge (15), and that the angle between the sides of the ridge is more shallow than the angle between the sides of said groove.

2. The arrangement as claimed in claim 1, **characterized** in that the angle between the sliding or abutment surface (17) of the shank of the insert and the opposing guiding edge of the insert is in the order of 4°.

## Patentansprüche

1. Anordnung eines Einsatzhalters und eines Schneideinsatzes, bei dem der Einsatz (3) von einer Ausnehmung (2) im Einsatzhalter (1) aufgenommen und darin durch Festklemmen zwischen Abschnitten des Einsatzhalters, welche die Ausnehmung bilden, gesichert ist, wobei die Ausnehmung für den Einsatz (3) in einer Richtung von einem Abschnitt gebildet wird, der so dimensioniert ist, daß er im wesentlichen ohne nachzugeben auftretende Belastungen aufnimmt und der mit einem geraden Führungsabschnitt (4, 5) welcher mit einer geraden Kante des Einsatzes zusammenwirkt, ausgebildet ist, und in der anderen Richtung durch einen nasenförmigen elastischen Abschnitt (8) gebildet wird, welcher in Richtung der Ausnehmung von kleinerem Ausmaß ist als die mit dem Führungsabschnitt ausgebildete Seite, wobei der Einsatz (3) einen Schaft (14), dessen eine Seite mit dem Führungsabschnitt (4, 5) der Ausnehmung (2) angepaßten Führungsmitteln (15) ausgebildet ist und dessen gegenüberliegende Seite einen am freien Ende des Schaftes (14) anliegenden geneigten oder abgeschrägten Bereich (16) aufweist, und das freie Ende (10) des nasenförmigen Bereichs (8) ausgebildet ist, um als Endanschlag für den Einsatz zu dienen und um in eine im wesentlichen querliegende Fläche (19) auf dem Einsatzkopf einzugreifen, dadurch gekennzeichnet, daß der eine Seite der Ausnehmung bildende elastische Bereich (8), der eine Seite der Ansnehmung bildet, mit einem flachen, in Richtung auf die gegenüberliegende Seite der Ausnehmung sich erstreckenden Vorsprung ausgebildet ist, und eine definierte Oberseite (12) von kleinem Ausmaß in der Längsrichtung der Ausnehmung aufweist, und daß der geneigte und abgeschrägte Abschnitt (16) des Schaftes in einen im wesentlichen geraden Oberflächenabschnitt (17), welcher als eine Gleit- und Widerlagerfläche für die Vorsprungsoberseite (12) dient, übergeht, und die, in die vom geneigten oder abgeschrägten Abschnitt (16) entgegengesetzte Richtung, leicht in Richtung auf die gegenüberliegende Seite des Einsatzes zuläuft, daß der geneigte und abgeschrägte Abschnitt (16) ausgebildet ist, um während der Einführung des Einsatzes (3) in die Ausnehmung (2) durch den Eingriff mit der Oberseite (12) des flachen Vorsprungs, den nasenförmigen Abschnitt (8) entgegen der diesem inhärenten Elastizität beiseite zu bewegen oder zu biegen, um während der weiteren Einführung einen transvers linearen Eingriff mit der geneigten Gleit- und Widerlageroberfläche (17) bei einer sukzessive Abnahme der Ablenkung oder des Beiseiteschiebens und daher eine Abnahme der genutzten, nach außen gerichteten Elastizität zu erlauben, wobei der Führungsabschnitt auf der einen Seite der Ausnehmung des Einsatzhalters eine im wesentlichen V-förmige Rille (5) aufweist, daß die Führungsmittel entlang der geraden Linie des Einsatzes aus einem komplementären V-förmigen Steg (15) bestehen, und daß der Winkel zwischen den Seiten des Steges flacher ist als der Winkel zwischen den Seiten der Rille.

2. Anordnung nach Anspruch 1, dadurch gekennzeichnet, daß der Winkel zwischen der Gleit- oder Widerlagerfläche (17) des Schaftes des Einsatzes und der gegenüberliegenden Führungskante des Einsatzes in der Größenordnung von 4° liegt.

## Revendications

1. Agencement de porte-lame et d'outil de coupe, cet outil (3) étant reçu dans un évidement (2) du porte-lame (1) et y étant fixé par blocage entre des parties du porte-lame qui définissent ledit évidement, l'évidement destiné à l'outil (3) étant défini dans une première direction par une partie dimensionnée pour tenir compte de façon sensiblement indéformable de contraintes susceptibles de survenir et constituée d'une partie de guidage droite (4, 5) coopérant avec un bord droit de l'insert, et dans l'autre direction par une partie élastique en forme de nez (8) de plus petite étendue dans la direction de l'évidement que le côté formé par la partie de guidage, cet outil (3) comprenant une soie (14) dont un côté est muni d'un moyen de guidage (15) adapté à la partie de guidage (4, 5) de l'évidement (2) et dont le côté opposé comprend une partie inclinée ou biseautée (16) adjacente à l'extrémité libre de la soie (14), et l'extrémité libre (10) de la partie en forme de nez (8) étant adaptée à servir de butée d'arrêt pour ledit outil et à s'engager avec une surface sensiblement transverse (19) sur la tête de l'outil, caractérisé en ce que la partie élastique (8) formant un côté de l'évidement est constituée d'une partie en saillie peu profonde s'étendant vers le côté opposé de l'évidement et comprend un sommet défini (12) de petite étendue dans la direction de la longueur de l'évidement, en ce que la partie inclinée et biseautée (16) de la soie se prolonge en une partie de surface sensiblement droite (17) qui sert de surface de glissement et de butée pour le sommet en saillie défini (12) et qui, dans la direction s'écartant de la partie inclinée ou biseautée (16) converge légèrement vers le côté opposé de l'outil, en ce que la partie inclinée et biseautée (16) est adaptée à déplacer ou à courber la partie en forme de nez (8) à l'encontre de sa force élastique naturelle pendant l'insertion de l'outil (3) dans l'évidement (2) par engagement avec le sommet (12) de la partie en saillie peu profonde qui permet, pendant l'insertion complémentaire un engagement transverse linéaire avec ladite surface inclinée de glissement et de butée (17), avec une réduction successive de la déflexion ou de la courbure et donc une réduction de l'élasticité vers l'extérieur impliquée, en ce que la partie de glissement sur le premier côté de l'évidement du porte-lame comprend une rainure sensiblement en forme de V (5), en ce que le moyen de guidage le long du bord droit de l'insert consiste en une arête en forme de V complémentaire (15), et en ce que l'angle entre les bords de l'arête est légèrement plus grand que l'angle entre les bords de la rainure.

2. Agencement selon la revendication 1, caractérisé en ce que l'angle entre la surface de coulissement ou de butée (17) de la soie de l'outil et le bord de guidage opposé de l'insert est de l'ordre de 4°.
